(19) Europäisches Patentamt / European Patent Office / Office européen des brevets

(11) **EP 4 679 248 A1**

(12) **EUROPEAN PATENT APPLICATION**
published in accordance with Art. 153(4) EPC

(43) Date of publication:
**14.01.2026 Bulletin 2026/03**

(21) Application number: **24775189.4**

(22) Date of filing: **20.03.2024**

(51) International Patent Classification (IPC):
**G06F 3/04883** (2022.01)    **G06F 3/041** (2006.01)
**G06F 3/0482** (2013.01)    **G06F 3/04842** (2022.01)

(52) Cooperative Patent Classification (CPC):
**G06F 3/041; G06F 3/0482; G06F 3/04842;
G06F 3/04883**

(86) International application number:
**PCT/KR2024/003481**

(87) International publication number:
**WO 2024/196142 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023 KR 20230035753
11.04.2023 KR 20230047707**

(71) Applicant: **Samsung Electronics Co., Ltd
Suwon-si, Gyeonggi-do 16677 (KR)**

(72) Inventors:
• **KIM, Dohyeon
Suwon-si Gyeonggi-do 16677 (KR)**
• **KWAK, Taewon
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE FOR DISPLAYING HANDWRITTEN INPUT AND OPERATION METHOD THEREOF**

(57)    An electronic device according to an embodiment may include a display, at least one processor, and a memory storing instructions. The instructions according to an embodiment may be set so that, when executed by the at least one processor, the electronic device displays handwritten input, including a plurality of points, from a user via the display. The instructions according to an embodiment may be set so that, when executed by the at least one processor, the electronic device identifies a plurality of first inflection points and a plurality of second inflection points among the plurality of points on the basis of the vertical coordinate value of each of the plurality of points. The instructions according to an embodiment may be set so that, when executed by the at least one processor, the electronic device identifies the slope values of a plurality of lines connecting each of the plurality of first inflection points to the plurality of second inflection points adjacent thereto. The instructions according to an embodiment may be set so that, when executed by the at least one processor, the electronic device identifies a representative slope value for each of a plurality of sections of the handwritten input on the basis of the slope values. The instructions according to an embodiment may be set so that, when executed by the at least one processor, the electronic device determines first slope values of the plurality of points on the basis of the representative slope value of each of the plurality of sections. The instructions according to an embodiment may be set so that, when executed by the at least one processor, the electronic device changes the slope of the handwritten input by adjusting the horizontal coordinate value of each of the plurality of points on the basis of the first slope values and target slope values.

**(Cont. next page)**

START

DISPLAY HANDWRITING INPUT INCLUDING
PLURALITY OF POINTS BY USER INPUT — 301

IDENTIFY PLURALITY OF FIRST INFLECTION POINTS AND PLURALITY
OF SECOND INFLECTION POINTS AMONG THE
PLURALITY OF POINTS BASED ON VERTICAL COORDINATE
VALUES OF EACH OF PLURALITY OF POINTS — 303

IDENTIFY SLOPE VALUES OF A PLURALITY OF LINES
CONNECTING A PLURALITY OF FIRST INFLECTION POINTS
TO A PLURALITY OF SECOND INFLECTION POINTS
ADJACENT TO EACH OTHER — 305

IDENTIFY REPRESENTATIVE SLOPE VALUES OF
THE PLURALITY OF SECTIONS BASED ON THE SLOPE VALUES — 307

DETERMINE FIRST SLOPE VALUES OF THE PLURALITY OF
POINTS BASED ON THE REPRESENTATIVE
SLOPE VALUES OF THE PLURALITY OF SECTIONS — 309

CHANGE THE SLOPE OF THE HANDWRITING INPUT BY ADJUSTING
THE HORIZONTAL COORDINATE VALUE OF THE PLURALITY
OF POINTS BASED ON THE FIRST SLOPE VALUES
AND THE TARGET SLOPE VALUE — 311

END

# FIG. 3

**Description**

[Technical Field]

An embodiment of the present invention relates to an electronic device for displaying a handwriting input and an operation method thereof.

[Background Art]

Recently in wide use are portable electronic devices, such as smartphones, tablet PCs, or wearable devices. Users may make use of various functions using various input means, such as fingers or input tools, e.g., stylus pens.

Input using a stylus pen enables more accurate touch input than using a finger and may be useful for executing memo or sketch applications. Further, handwriting input provides a higher degree of freedom in creating content, rapid entry, and diversified uses due to enhanced character recognition technology.

[Detailed Description of the Invention]

[Technical Solution]

An electronic device according to an embodiment may include a display, at least one processor, and memory storing instructions. The instructions according to an embodiment may be configured to, when executed by the at least one processor, cause the electronic device to display, through the display, a handwriting input including a plurality of points by a user input. The instructions according to an embodiment may be configured to, when executed by the at least one processor, cause the electronic device to identify a plurality of first inflection points and a plurality of second inflection points among the plurality of points based on vertical coordinate values of each of the plurality of points. The instructions according to an embodiment may be configured to, when executed by the at least one processor, cause the electronic device to identify slope values of a plurality of lines connecting each of the plurality of first inflection points to each of the plurality of second inflection points adjacent to each other. The instructions according to an embodiment may be configured to, when executed by the at least one processor, cause the electronic device to identify a representative slope value of each of a plurality of sections for the handwriting input based on the slope values. The instructions according to an embodiment may be configured to, when executed by the at least one processor, cause the electronic device to determine first slope values of the plurality of points based on the representative slope value of each of the plurality of sections. The instructions according to an embodiment may be configured to, when executed by the at least one processor, cause the electronic device to adjust horizontal coordinate values of each of the plurality of points based on the first slope values and a target slope value to change a slope of the handwriting input.

A method of operating an electronic device according to an embodiment may include displaying, through a display included in the electronic device, a handwriting input including a plurality of points by a user input. The method of operating an electronic device according to an embodiment may include identifying a plurality of first inflection points and a plurality of second inflection points among the plurality of points based on vertical coordinate values of each of the plurality of points. The method of operating an electronic device according to an embodiment may include identifying slope values of a plurality of lines connecting each of the plurality of first inflection points to each of the plurality of second inflection points adjacent to each other. The method of operating an electronic device according to an embodiment may include identifying a representative slope value of each of a plurality of sections for the handwriting input based on the slope values. The method of operating an electronic device according to an embodiment may include determining first slope values of the plurality of points based on the representative slope value of each of the plurality of sections. The method of operating an electronic device according to an embodiment may include adjusting horizontal coordinate values of each of the plurality of points based on the first slope values and a target slope value to change a slope of the handwriting input.

A computer-readable, non-transitory recording medium according to an embodiment may store instructions capable of performing displaying, through a display included in an electronic device, a handwriting input including a plurality of points by a user input, identifying a plurality of first inflection points and a plurality of second inflection points among the plurality of points based on vertical coordinate values of each of the plurality of points, identifying slope values of a plurality of lines connecting each of the plurality of first inflection points to each of the plurality of second inflection points adjacent to each other, identifying a representative slope value of each of a plurality of sections for the handwriting input based on the slope values, determining first slope values of the plurality of points based on the representative slope value of each of the plurality of sections, and adjusting horizontal coordinate values of each of the plurality of points based on the first slope values and a target slope value to change a slope of the handwriting input.

[Brief Description of Drawings]

FIG. 1 is a block diagram illustrating an electronic device in a network environment according to various embodiments;
FIG. 2 is a schematic block diagram illustrating an electronic device according to an embodiment;

FIG. 3 is a flowchart illustrating a method by which an electronic device changes a slope of a handwriting input, according to an embodiment;

FIG. 4 is a flowchart illustrating a method by which an electronic device identifies a representative slope of each of a plurality of sections for a handwriting input, according to an embodiment;

FIGS. 5A, 5B, 5C, 5D, 5E and 5F are views illustrating a method by which an electronic device changes a slope of a handwriting input, according to an embodiment;

FIG. 6 is a flowchart illustrating a method by which an electronic device adjusts positions of a plurality of points included in a handwriting input, according to an embodiment;

FIGS. 7A, 7B, 7C and 7D are views illustrating a method by which an electronic device adjusts positions of a plurality of points included in a handwriting input, according to an embodiment;

FIGS. 8A, 8B and 8C are views illustrating a method by which an electronic device adjusts the position of each of a plurality of points included in a handwriting input, according to an embodiment;

FIG. 9 is a flowchart illustrating a method by which an electronic device adjusts a spacing or width of a handwriting input, according to an embodiment;

FIG. 10A is a view illustrating a method by which an electronic device according to an embodiment adjusts a spacing of a letter or word included in a handwriting input;

FIG. 10B is a view illustrating a method by which an electronic device according to an embodiment adjusts a width of a handwriting input;

FIGS. 11A, 11B, 11C, 11D and 11E are views illustrating a method by which an electronic device changes a slope of a handwriting input through a menu displayed on a display, according to an embodiment; and

FIGS. 12A, 12B, 12C and 12D are views illustrating a method by which an electronic device changes spacing of a letter or word included in a handwriting input through a menu displayed on a display, according to an embodiment.

[Mode for Carrying out the Invention]

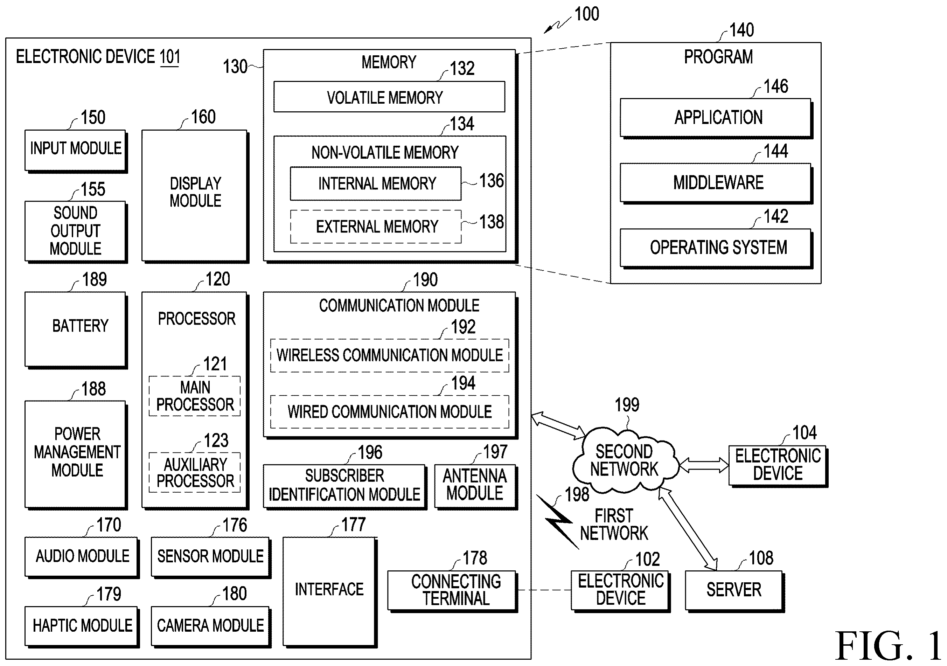

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

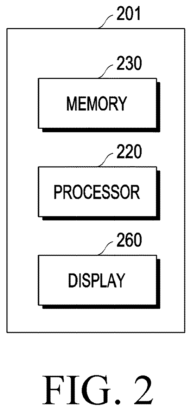

FIG. 2 is a schematic block diagram illustrating an electronic device according to an embodiment.

Referring to FIG. 2, according to an embodiment, an electronic device 201 may include a processor 220, memory 230, and a display 260. For example, the electronic device 201 may be implemented to be identical or similar to the electronic device 101 of FIG. 1.

According to an embodiment, the processor 220 may control the overall operation of the electronic device 201. For example, the processor 220 may be implemented to be the same as or similar to the processor 120 of FIG. 1.

According to an embodiment, the processor 220 may identify a user input through the display 260 and display a handwriting input (or a handwriting image) corresponding to the identified user input. For example, the user input may be an input through the user's finger or a stylus pen (e.g., a handwriting input). For example, the display 260 may be implemented identically or similarly to the display module 160 of FIG. 1. For example, the display 260 may be implemented as a touchscreen.

According to an embodiment, the processor 220 may display a handwriting input including a plurality of points by the user input through the display 260. For example, each of the plurality of points may mean points constituting the handwriting input. For example, each of the plurality of points may have a coordinate value set by the processor 220. For example, the coordinate value may include a horizontal coordinate value (e.g., x-axis value) and a vertical coordinate value (e.g., y-axis value) based on a coordinate system (e.g., rectangular coordinate system) set by the processor 220.

According to an embodiment, the processor 220 may identify a plurality of first inflection points and a plurality of second inflection points among the plurality of points based on the vertical coordinate value of each of the plurality of points. For example, the plurality of first inflection points (e.g., maximum points) may be points having vertical coordinate values greater than those of points adjacent on two opposite sides among the plurality of points included in the handwriting input. The plurality of second inflection points (e.g., minimum points) may mean points having vertical coordinate values smaller than those of points adjacent on two opposite sides among the plurality of points included in the handwriting input.

According to an embodiment, the processor 220 may identify a plurality of lines connecting each of the plurality of first inflection points to each of the plurality of second inflection points adjacent to each other. The processor 220 may identify slope values of the plurality of lines. For example, the slope value may mean a value indicating a degree of tilting with respect to a virtual horizontal line.

According to an embodiment, the processor 220 may divide the handwriting input into a plurality of sections based on a length of the handwriting input or a number of the plurality of points included in the handwriting input. For example, the plurality of sections may be sections obtained by equally dividing the length of the handwriting input by a specific number. Alternatively, the plurality of sections may be sections obtained by equally dividing the points included in the handwriting input by a specific number.

According to an embodiment, the processor 220 may identify a representative slope value of each of the plurality of sections for the handwriting input based on the slope values.

According to an embodiment, the processor 220 may determine first slope values of the plurality of points (or all points) included in the handwriting input based on the representative slope value of each of the plurality of sections. For example, the first slope values may be determined based on the representative slope value.

According to an embodiment, the processor 220 may determine a targeted slope value or a target slope value indicating how much to tilt the handwriting input. For example, the target slope value may be automatically determined by the processor 220 or determined by the user.

According to an embodiment, the processor 220 may change the slope of the handwriting input by adjusting the horizontal coordinate value of each of the plurality of points based on the first slope values and the target slope value.

According to an embodiment, the memory 230 may store information about the handwriting input (e.g., information for adjusting a size of the handwriting input or changing the slope). For example, the memory 230 may be implemented to be substantially the same or similar to the memory 130 of FIG. 1.

At least some of operations of the electronic device 201 described below may be performed or controlled by the processor 220. However, for convenience of description, it is described that the electronic device 201 performs the corresponding operations.

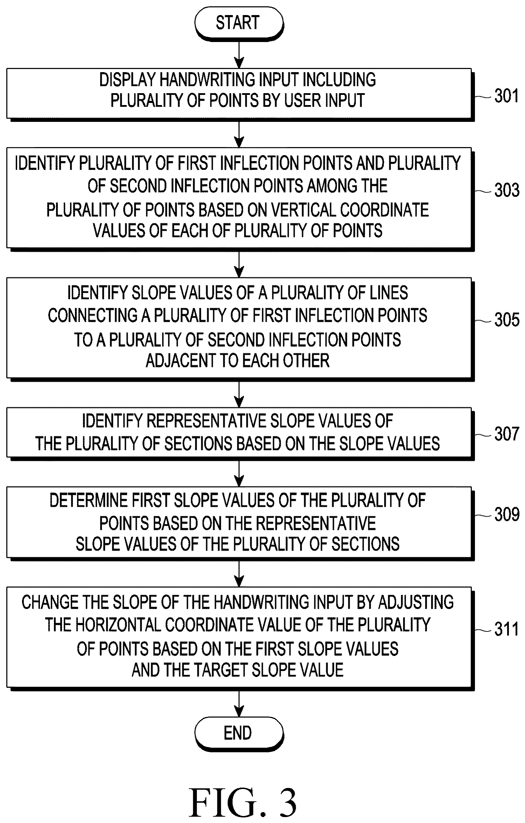

FIG. 3 is a flowchart illustrating a method by which an electronic device changes a slope of a handwriting input, according to an embodiment.

Referring to FIG. 3, according to an embodiment, in operation 301, the electronic device 201 (e.g., the electronic device 201 of FIG. 2) may display a handwriting input including a plurality of points by a user input through the display 260 (e.g., the display 260 of FIG. 2).

According to an embodiment, in operation 303, the electronic device 201 may identify a plurality of first inflection points and a plurality of second inflection points among the plurality of points based on the vertical coordinate value of each of the plurality of points.

According to an embodiment, in operation 305, the electronic device 201 may identify slope values of a plurality of lines connecting each of the plurality of first inflection points to each of the plurality of second inflection points adjacent to each other.

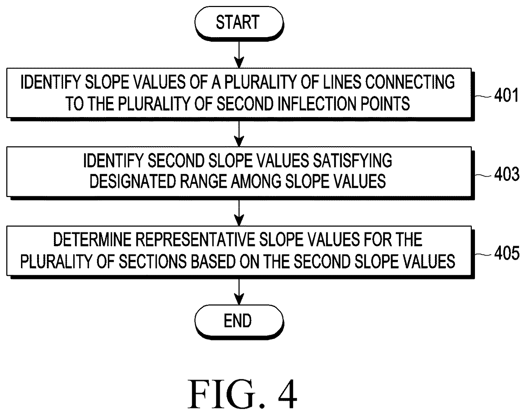

According to an embodiment, in operation 307, the electronic device 201 may identify a representative slope value of each of the plurality of sections for the handwriting input based on the slope values of the plurality of lines. Meanwhile, a method of identifying the representative slope value of each of the plurality of sections for the handwriting input is described below in detail in connection to FIG. 4.

According to an embodiment, in operation 309, the electronic device 201 may determine first slope values of the plurality of points based on the representative slope value of each of the plurality of sections.

According to an embodiment, in operation 311, the electronic device 201 may change the slope of the handwriting input by adjusting the horizontal coordinate value of each of the plurality of points based on the first slope values and the target slope value.

Through the above-described method, the electronic device 201 may change the slope of the handwriting input while the handwriting input maintains overall consistency. Accordingly, the electronic device 201 may display the handwriting input beautifully. Further, the user may edit the handwriting input simply and easily through the electronic device 201.

FIG. 4 is a flowchart illustrating a method by which an electronic device identifies a representative slope of each of a plurality of sections for a handwriting input, according to an embodiment.

Referring to FIG. 4, according to an embodiment, in operation 401, the electronic device 201 (e.g., the electronic device 201 of FIG. 2) may identify slope values of a plurality of lines connecting each of the plurality of first inflection points to each of the plurality of second inflection points adjacent to each other.

According to an embodiment, in operation 403, the electronic device 201 may identify a second slope value satisfying a designated range among the slope values of the plurality of lines. For example, the designated range may represent a predetermined angle range for selecting lines (or lines close to vertical) having a valid direction or angle among the slope values. For example, the designated range may be automatically determined by the processor 220 (e.g., the processor 220 of FIG. 2) or determined by the user. For example, the designated range may mean an angle range obtained by adding or subtracting a designated angle (e.g., 45 degrees) to/from 90 degrees (or 180 degrees) based on a horizontal line.

According to an embodiment, in operation 405, the electronic device 201 may determine a representative slope value for each of the plurality of sections based on the second slope values. For example, the electronic device 201 may determine an average value of slope values included in each of the plurality of sections among the second slope values as the representative slope value of the corresponding section. For example, slope values that do not satisfy the designated range among the slope values of the plurality of lines may not be used to determine the representative slope value.

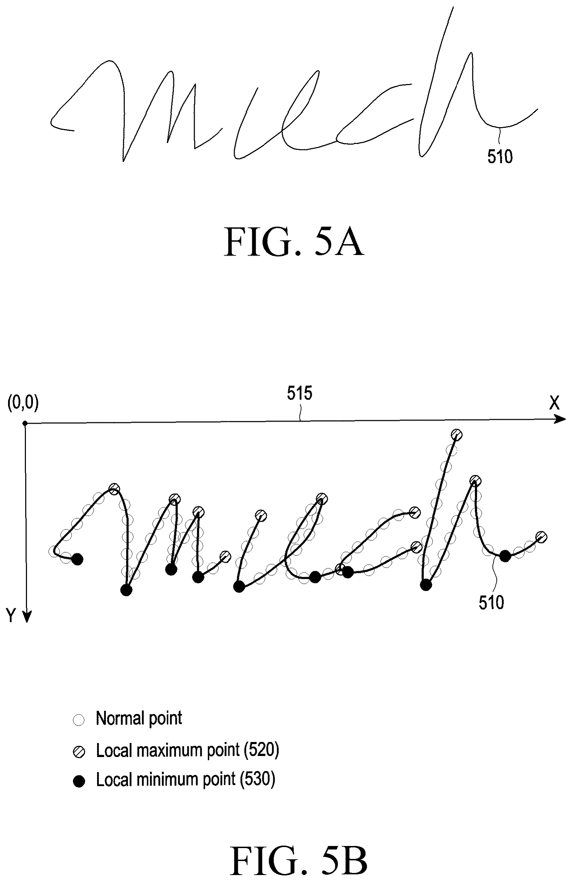

FIGS. 5A to 5F are views illustrating a method by which an electronic device determines a slope of a handwriting input, according to an embodiment.

Referring to FIG. 5A, according to an embodiment, the electronic device 201 (e.g., the electronic device 201 of FIG. 2) may obtain and display a handwriting input 510 including a plurality of points by a user input (e.g., input through a stylus pen or the user's finger) through the display 260 (e.g., the display 260 of FIG. 2).

Meanwhile, the form or shape of the handwriting input illustrated in FIG. 5A is merely exemplary, and the technical spirit of the present invention may not be limited thereto.

Referring to FIG. 5B, according to an embodiment, the electronic device 201 may determine coordinate values of the plurality of points included in the handwriting input 510. For example, the electronic device 201 may set the coordinate system 515 (e.g., rectangular coordinate system) for determining coordinate values of the plurality of points. Further, the electronic device 201 may designate the position of an origin (e.g., (0,0) point) of the coordinate system 515.

According to an embodiment, the electronic device 201 may identify a plurality of first inflection points 520 and a plurality of second inflection points 530 among the plurality of points based on the vertical coordinate value (e.g., y coordinate value) of each of the plurality of points. For example, the plurality of first inflection points 520 may be points having vertical coordinate values greater than those of points adjacent on two opposite sides among the plurality of points included in the handwriting input. The plurality of second inflection points 530 may be points having vertical coordinate values smaller than those of points adjacent on two opposite sides among the plurality of points included in the handwriting input. Meanwhile, a start point and an end point of the handwriting input may be a first inflection point if the vertical coordinate value of the corresponding point is greater than an adjacent point, and may be a second inflection point if the vertical coordinate value of the corresponding point is smaller than the adjacent point.

Meanwhile, the type of the coordinate system and/or the position of the coordinate system (e.g., origin position) illustrated in FIG. 5B are merely exemplary, and the technical spirit of the present invention may not be limited thereto. Further, the number or size of the plurality of points included in the handwriting input is merely exemplary, and the technical spirit of the present invention may not be limited thereto.

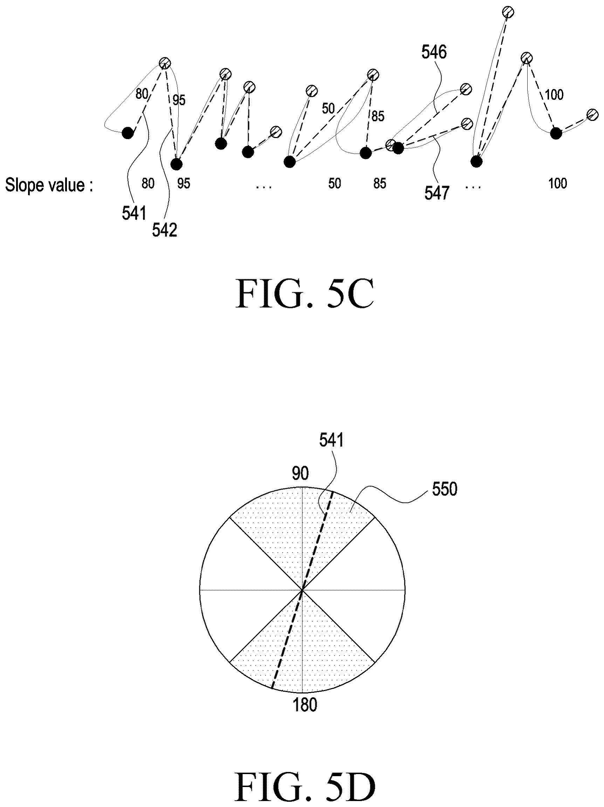

Referring to FIG. 5C, according to an embodiment, the electronic device 201 may identify slope values of a plurality of lines (e.g., 541, 542, 546, 547) in which each of the plurality of first inflection points is connected to each of the plurality of second inflection points adjacent to each other. For example, the slope value of the first line 541 may be 80 degrees, and the slope value of the second line 542 may be 95 degrees.

Referring to FIG. 5D, according to an embodiment, the electronic device 201 may identify slope values satisfying a designated range 550 (e.g., 90-45 degrees to 90+45 degrees range and 180-45 degrees to 180+45 degrees) among the slope values of the plurality of lines (e.g., 541, 542, 546, 547). For example, the first line 541 and the second line 542 may satisfy the designated range 550, and the third line 546 and the fourth line 547 may not satisfy the designated range 550. The electronic device 201 may identify or determine a representative slope value of each of the plurality of sections for the handwriting input except for the third line 546 and the fourth line 547 among the slope values of the plurality of lines (e.g., 541, 542, 546, 547).

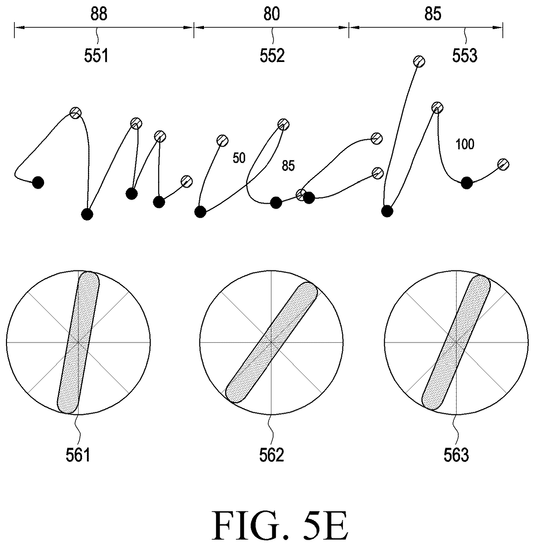

Referring to FIG. 5E, according to an embodiment, the electronic device 201 may determine a plurality of sections for the handwriting input. Further, the electronic device 201 may determine a representative slope value of each of the plurality of sections 551, 552, 553. For example, the first representative slope value 561 of the first section 551 may be 88 degrees, the second representative slope value 562 of the second section 552 may be 80 degrees, and the third representative slope value 563 of the third section 553 may be 85 degrees. For example, the representative slope value may be an average value of slope values of lines included in each of the plurality of sections 551, 552, 553. For example, the electronic device 201 may not consider slope values that do not satisfy the designated range in calculating the average value as described in connection to FIG. 5D.

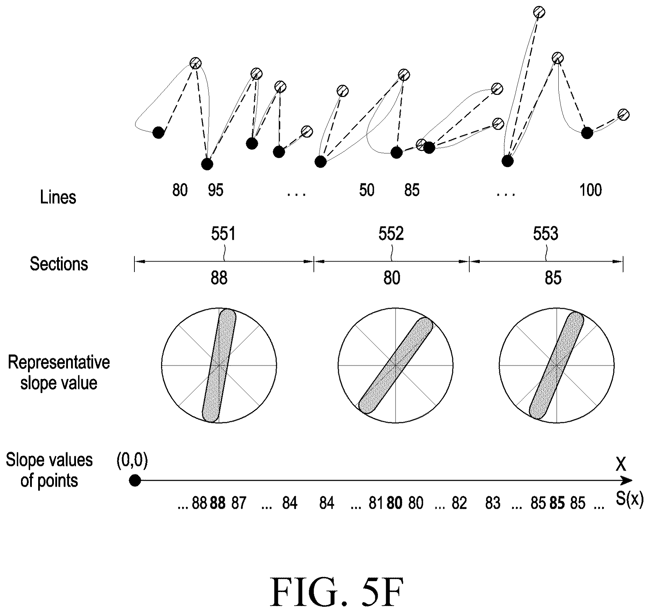

Referring to FIG. 5F, according to an embodiment, the electronic device 201 may determine first slope values of all of the plurality of points included in the handwriting input based on the representative slope value of each of the plurality of sections. For example, the slope values of points included in the first section 551 may be determined based on the representative slope values 561, 562 of the first section 551 and the second section 552. The slope values of points included in the second section 552 may be determined based on the representative slope values 561, 562, 563 of the first section 551, the second section 552, and the third section 553. Further, the slope values of points included in the third section 553 may be determined based on the representative slope values 562, 563 of the second section 552 and the third section 553. For example, the electronic device 201 may determine the slope value of a midpoint positioned in the center of the first section 551 as the first representative slope value 561. The electronic device 201 may determine the slope values of points positioned on the left side based on the midpoint of the first section 551 to be the same as the first representative slope value (e.g., 88 degrees). The electronic device 201 may determine the slope values of points positioned on the right side based on the midpoint of the first section 551 and positioned on the left side based on the midpoint of the second section 552 to be smaller than the first representative slope value (e.g., 88 degrees) and greater than the second representative slope value (e.g., 80 degrees). For example, the electronic device 201 may determine the slope values of the corresponding points so that the slope values of the corresponding points gradually decrease from the first representative slope value to the second representative slope value based on the horizontal coordinate values of the corresponding points. Similarly, the electronic device 201 may determine the slope values of points positioned on the right side based on the midpoint of the second section 552 and positioned on the left side based on the midpoint of the third section 553 to be greater than the second representative slope value (e.g., 80 degrees) and smaller than the third representative slope value (e.g., 85 degrees). For example, the electronic device 201 may determine the slope values of the corresponding points so that the slope values of the corresponding points gradually increase from the second representative slope value to the third representative slope value based on the horizontal coordinate values of the corresponding points. The electronic device 201 may determine the slope values of points positioned on the right side based on the midpoint of the third section 553 to be the same as the third representative slope value (e.g., 85 degrees). According to the above-described method, the electronic device 201 may interpolate or determine the slope values of points included in the first section 551, the second section 552, and the third section 553.

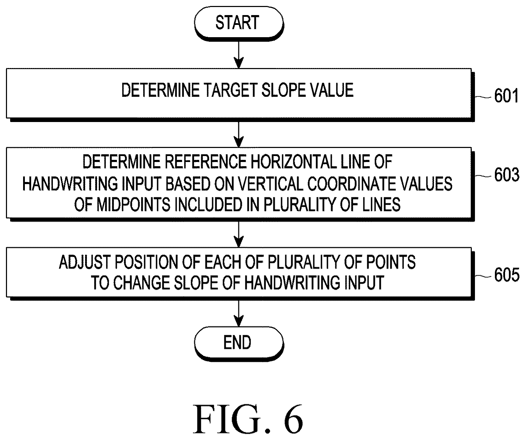

FIG. 6 is a flowchart illustrating a method by which an electronic device adjusts positions of a plurality of points included in a handwriting input, according to an embodiment.

Referring to FIG. 6, according to an embodiment, in operation 601, the electronic device 201 (e.g., the electronic device 201 of FIG. 2) may determine a target slope value. For example, the target slope value may represent an angle (or target angle) for overall adjusting the slope of the handwriting input. For example, the target slope value may be determined based on a form of the handwriting input analyzed by the processor 220 (e.g., the processor 220 of FIG. 2). Alternatively, the target slope value may be determined by the user at an arbitrary angle.

According to an embodiment, the electronic device 201 may determine an average value of first slope values for the plurality of lines as the target slope value. For example, the electronic device 201 may determine the target slope value using Equation 2. For example, ST may mean the target slope value, L may mean the number of the plurality of lines, and SL(i) may mean the slope value of each of the plurality of lines.

[Equation 1]

$$ST = \frac{1}{L} \sum_{i=1}^{L} SL(i)$$

According to another embodiment, the electronic device 201 may determine an average value of representative slope values of the plurality of sections as the target slope value. For example, the electronic device 201 may determine the target slope value using Equation 2. For example, ST may mean the target slope value, R may mean the number of the plurality of sections, and SR(i) may mean the representative slope value of each of the plurality of sections.

[Equation 2]

$$ST = \frac{1}{R} \sum_{i=1}^{R} SR(i)$$

According to an embodiment, in operation 603, the electronic device 201 may identify vertical coordinate values of midpoints (e.g., center points of lines) included in a plurality of lines connecting each of the plurality of first inflection points to each of the plurality of second inflection points adjacent to each other. The electronic device 201 may determine a reference horizontal line of the handwriting input based on the vertical coordinate values of the midpoints of the plurality of lines. For example, the reference horizontal line may be determined based on an average value of the vertical coordinate values of the midpoints of the plurality of lines.

According to an embodiment, in operation 605, the electronic device 201 may change the slope of the handwriting input by adjusting the position of each of the plurality of points based on the reference horizontal line. For example, the electronic device 201 may determine a first point of each of the plurality of points based on the first slope value of each of the plurality of points included in the handwriting input and the reference horizontal line.

For example, the first point may mean a point where a straight line having the first slope with respect to each of the plurality of points matches the reference horizontal line. The electronic device 201 may determine a second point having vertical coordinate values the same as the vertical coordinate value of each of the existing plurality of points based on the first point and the target slope value. For example, the second point may mean a point having the vertical coordinate value identical to the vertical coordinate value of each of the existing plurality of points on a straight line having the target slope value with respect to the first point. For example, the second point may have a different horizontal coordinate value when compared to the existing plurality of points. For example, the electronic device 201 may change the horizontal coordinate value of each of the plurality of points to the horizontal coordinate value indicated by the second point. Alternatively, the electronic device 201 may change each of the plurality of points to the second point.

Through the above-described method, the electronic device 201 may change the slope of the handwriting input by changing or adjusting the horizontal coordinate values of the plurality of points included in the handwriting input. Accordingly, the electronic device 201 may tilt the handwriting input with overall unity and beauty.

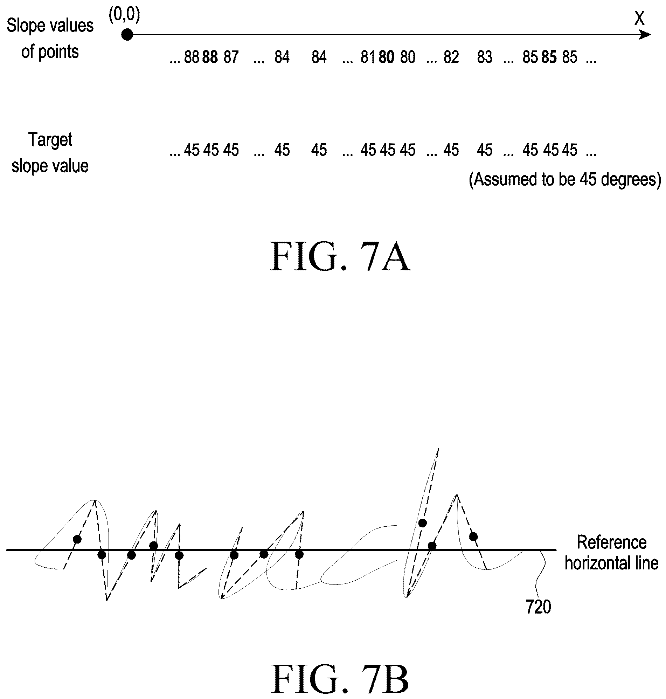

FIGS. 7A to 7D are views illustrating a method by which an electronic device adjusts positions of a plurality of points included in a handwriting input, according to an embodiment.

Referring to FIG. 7A, according to an embodiment, the electronic device 201 (e.g., the electronic device 201 of FIG. 2) may determine the target slope value as an arbitrary value (e.g., 45 degrees). For example, the target slope value may be determined by the processor 220 (e.g., the processor 220 of FIG. 2) or determined by the user.

Referring to FIG. 7B, according to an embodiment, the electronic device 201 may identify a plurality of lines connecting each of the plurality of first inflection points to each of the plurality of second inflection points adjacent to each other, and identify vertical coordinate values of midpoints of the plurality of lines. The electronic device 201 may determine the reference horizontal line 720 of the handwriting input based on the vertical coordinate values of the midpoints of the plurality of lines. For example, the reference horizontal line may be determined based on an average value of the vertical coordinate values of the midpoints of the plurality of lines. The reference horizontal line may also be set by other various methods.

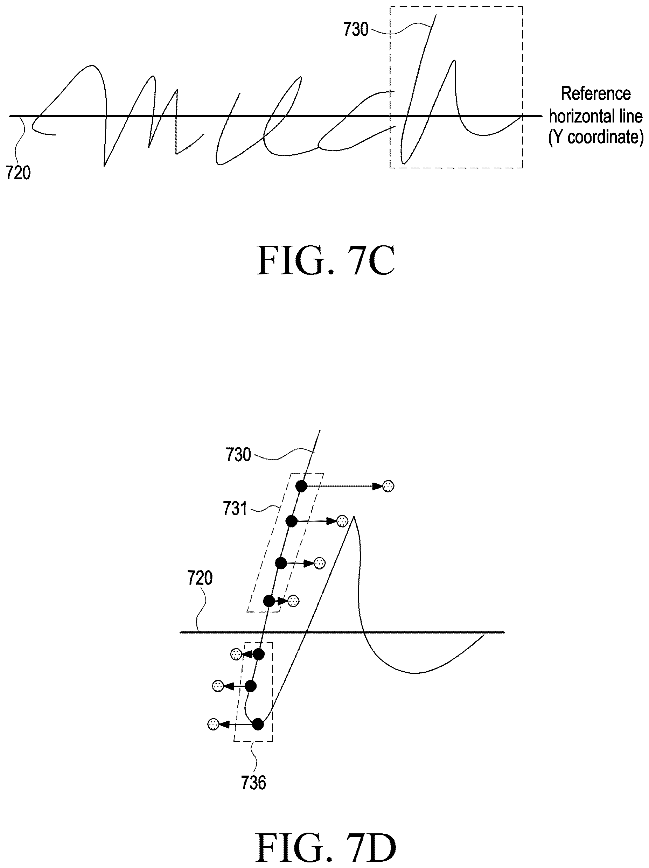

Referring to FIGS. 7C and 7D, according to an embodiment, the electronic device 201 may change the slope of the handwriting input by adjusting the position of each of the plurality of points based on the reference horizontal line 720. FIG. 7D may illustrate a method of adjusting positions of points included in a portion 730 of a handwriting input (e.g., 510 of FIG. 5A) illustrated in FIG.

7C based on a reference horizontal line 720.

Referring to FIG. 7D, according to an embodiment, when the target slope value (e.g., 45 degrees) is smaller than an average value of the first slope values (e.g., 84 degrees), the electronic device 201 may increase horizontal coordinate values of the points 731 located above the reference horizontal line 720 among the points 731, 736 included in the portion 730, and decrease horizontal coordinate values of the points 736 located below the reference horizontal line 720 among the points 731, 736. For example, the electronic device 201 may change the slope of the handwriting input (or the portion 730 of the handwriting input) by moving the points 731 located above the reference horizontal line 720 among the points 731, 736 included in the portion 730 to the right, and moving the points 736 located below the reference horizontal line 720 among the points 731, 736 included in the portion 730 to the left.

According to another embodiment, when the target slope value is greater than the average value of the first slope values, the electronic device 201 may decrease horizontal coordinate values of points located above the reference horizontal line 720 among the points 731, 736 included in the portion 730, and increase horizontal coordinate values of the points 736 located below the reference horizontal line 720 among the points 731, 736 included in the portion 730. For example, the electronic device 201 may change the slope of the handwriting input (or the portion 730 of the handwriting input) by moving the points 731 located above the reference horizontal line 720 among the points 731, 736 included in the portion 730 to the left, and moving the points 736 located below the reference horizontal line 720 among the points 731, 736 included in the portion 730 to the right.

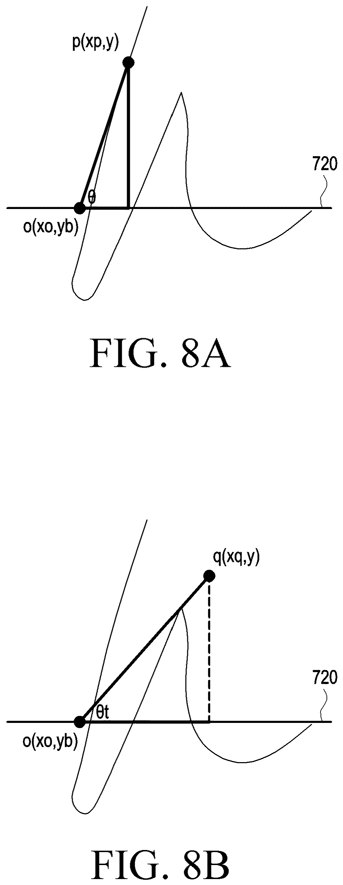

FIGS. 8A to 8C are views illustrating a method by which an electronic device adjusts the position of each of a plurality of points included in a handwriting input, according to an embodiment.

Referring to FIG. 8A, according to an embodiment, the electronic device 201 may identify the position (or coordinates) (e.g., p(xp, y)) of a specific point p among the plurality of points included in the handwriting input.

According to an embodiment, the electronic device 201 may determine the first point o of the specific point p based on the first slope value (e.g., θ) of the specific point p and the reference horizontal line 720. For example, the first point o may mean a point where a straight line having the first slope value of the specific point p contacts the reference horizontal line 720. The electronic device 201 may identify the position (or coordinates) (e.g., o(xo, yb)) of the first point.

Referring to FIG. 8B, according to an embodiment, the electronic device 201 may determine the second point q having the vertical coordinate value identical to the vertical coordinate value y of the specific point p based on the first point o and the target slope value θt. For example, the second point q may mean a point having the vertical coordinate value identical to the vertical coordinate value y of the specific point p on a straight line having the target slope value θt with respect to the first point p. The electronic device 201 may identify the position (or coordinates) (e.g., q(xq, y)) of the second point q.

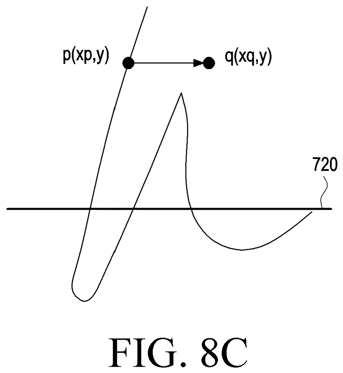

Referring to FIG. 8C, according to an embodiment, the electronic device 201 may change the specific point p to the second point q. For example, the electronic device 201 may adjust the horizontal coordinate value of the specific point p to the horizontal coordinate value of the second point q.

According to the above-described method, the electronic device 201 may adjust or change horizontal coordinate values for all of the plurality of points included in the handwriting input. Accordingly, the electronic device 201 may change the slope of the handwriting input with unity.

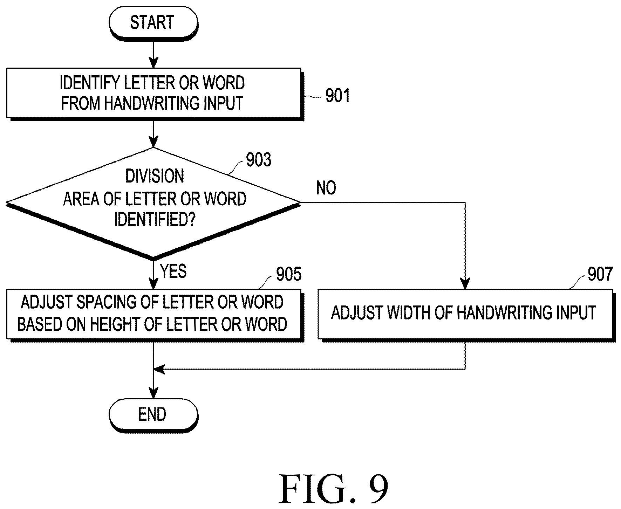

FIG. 9 is a flowchart illustrating a method by which an electronic device adjusts a spacing or width of a handwriting input, according to an embodiment.

Referring to FIG. 9, according to an embodiment, the electronic device 201 (e.g., the electronic device 201 of FIG. 2) may adjust spacing or width of the handwriting input. For example, the electronic device 201 may adjust the spacing or width of the handwriting input automatically or based on the user's input.

According to an embodiment, in operation 901, the electronic device 201 may identify a letter or word from the handwriting input. For example, the electronic device 201 may identify a letter (e.g., English or Korean letter) or word (e.g., English or Korean word) from the handwriting input using a letter recognition function.

According to an embodiment, in operation 903, the electronic device 201 may determine whether a division area of the letter or word may be identified in the handwriting input. For example, the electronic device 201 may determine whether an area that may be divided in units of letter or word is identified in the handwriting input.

According to an embodiment, the electronic device 201 may identify a division area of handwriting strokes corresponding to letter or word units by recognizing the handwriting input (e.g., stroke) through a handwriting letter recognizer (or handwriting letter recognition module). For example, the handwriting character recognizer may be implemented as software. The handwriting character recognizer may be stored in the electronic device 201.

According to an embodiment, if it is determined that the division area of the letter or word may be identified in the handwriting input (Yes in operation 903), in operation 905, the electronic device 201 may adjust the spacing of the letter or word based on the height of the letter or word. For example, the electronic device 201 may identify the height of the letter or word before adjusting the spacing of the letter or word. For example, the electronic device 201 may adjust the spacing of the letter or word using Equation 3. For example, G may be adjusted spacing, h may be the height of the letter or word, and r1 may mean a reference spacing ratio. According to the implementation, reference spacing ratios applied to each of the letter and word may be applied differently. The reference spacing ratio may be automatically set by the processor 220 (e.g., the processor 220 of FIG. 2) or set by the user. For example, the reference spacing ratio may be determined as an appropriate value based on the characteristics of a language (e.g., English or Korean).

[Equation 3]

$$G = h \times r1$$

For example, when the identified (or calculated) height of the word or letter is 30 and the reference spacing ratio is 0.8 (80%), the electronic device 201 may adjust the spacing between letters or words to 24 (=30*0.8).

According to an embodiment, the electronic device 201 may adjust the spacing between letters or words by other various methods. For example, the electronic device 201 may identify an average value of letter or word spacings (widths), and equally adjust the spacing between all letters or words to the average value of the identified spacings (widths) between letters or words. For example, when the handwriting input includes four words and spacings between the words are 20, 30, and 40, the electronic device 201 may equally adjust the spacing between all words to 30, which is an average value of spacings between existing words. Alternatively, the electronic device 201 may equally adjust the spacing between all letters or words to a specific width designated by the user. For example, when the spacing designated by the user is 25, the electronic device 201 may equally adjust the spacing between all letters or words included in the handwriting input to 25.

According to an embodiment, if it is determined that the division area of the letter or word may not be identified in the handwriting input (No in operation 903), in operation 907, the electronic device 201 may adjust the width of the handwriting input. For example, the electronic device 201 may adjust the width of the handwriting input using Equation 4. For example, WN may be the adjusted width of the handwriting input, WO may be the existing width of the handwriting input, and r2 may mean the reference width ratio. The reference width ratio may be automatically set by the processor 220 (e.g., the processor 220 of FIG. 2) or set by the user. For example, the reference width ratio may be determined as an appropriate value based on the characteristics of a language (e.g., English or Korean). For example, if the reference width ratio is 1, the width may not be changed.

[Equation 4]

$$WN = WO \times r2$$

According to another embodiment, even when it is determined that the division area of the letter or word may be identified in the handwriting input, the electronic device 201 may adjust the width of the handwriting input. For example, the electronic device 201 may adjust the width of the handwriting input based on a user input for adjusting the width of the handwriting input.

According to the above-described method, the electronic device 201 may adjust or edit the spacing between letters or words included in the handwriting input. Further, the electronic device 201 may adjust or edit the width of the handwriting input.

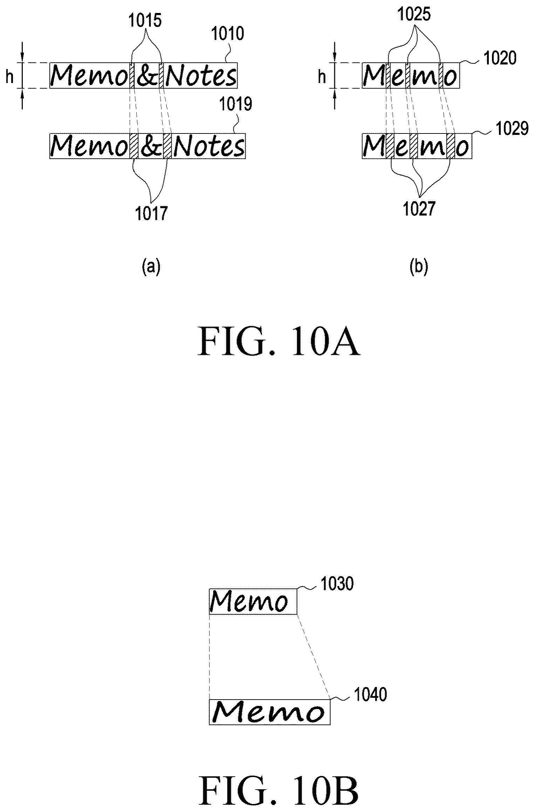

FIG. 10A is a view illustrating a method by which an electronic device according to an embodiment adjusts a spacing of a letter or word included in a handwriting input.

Referring to (a) of FIG. 10A, according to an embodiment, the electronic device 201 (e.g., the electronic device 201 of FIG. 2) may identify the division areas 1015 between words included in the handwriting input 1010. The electronic device 201 may identify the height h of the handwriting input 1010. The electronic device 201 may adjust (e.g., increase or decrease) the spacing 1017 between words at a predetermined ratio based on the height h of the handwriting input 1010. The electronic device 201 may display the handwriting input 1019 in which the spacing 1017 between words is adjusted.

Referring to (b) of FIG. 10A, according to an embodiment, the electronic device 201 (e.g., the electronic device 201 of FIG. 2) may identify the division areas 1025 between letters included in the handwriting input 1020. The electronic device 201 may identify the height h of the handwriting input 1020. The electronic device 201 may adjust (e.g., increase or decrease) the spacing 1027 between letters at a predetermined ratio based on the height h of the handwriting input 1020. The electronic device 201 may display the handwriting input 1029 in which the spacing 1027 between letters is adjusted.

FIG. 10B is a view illustrating a method by which an electronic device according to an embodiment adjusts a width of a handwriting input.

Referring to FIG. 10B, according to an embodiment, the electronic device 201 (e.g., the electronic device 201 of FIG. 2) may adjust (e.g., increase or decrease) width of the handwriting input 1030. For example, the electronic device 201 may adjust the width of the handwriting input 1030 according to a predetermined ratio. The electronic device 201 may display the handwriting input 1040 in which the width is adjusted.

Meanwhile, FIGS. 10A and 10B illustrate only an embodiment in which the electronic device 201 increases the spacing between letters or words included in the handwriting input and width of the handwriting input, but this is only for convenience of description, and the technical spirit of the present invention may not be limited thereto. For example, the electronic device 201 may also decrease the spacing between letters or words included in the handwriting input and width of the handwriting input.

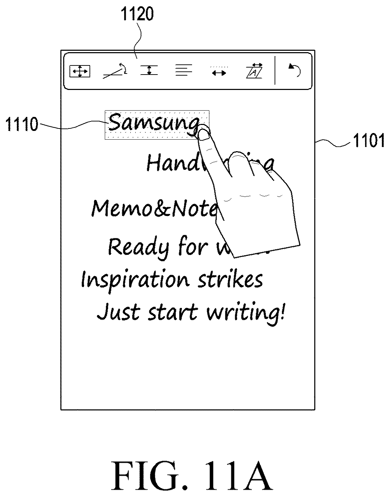

FIGS. 11A to 11E are views illustrating a method by which an electronic device changes a slope of a handwriting input through a menu displayed on a display, according to an embodiment.

Referring to FIG. 11A, according to an embodiment, the electronic device 1101 (e.g., the electronic device 201 of FIG. 2) may display a handwriting input through a display (e.g., the display of FIG. 2). For example, the electronic device 1101 may execute an application such as a note, memo, or diary in which handwriting is written, and display a handwriting input previously written in the corresponding application. Alternatively, the electronic device 1101 may execute an application such as a note, memo, or diary, and then display a handwriting input corresponding to a user input.

According to an embodiment, the electronic device 1101 may select a first handwriting input 1110 among all the handwriting inputs based on a user input (e.g., tap, drag, double tap, long press input). In this case, the selected first handwriting input 1110 may be displayed to be distinguished from unselected handwriting inputs. When the first handwriting input 1110 is selected, the electronic device 1101 may display a menu 1120 for editing the first handwriting input 1110. Alternatively, even when the first handwriting input 1110 is not selected, the electronic device 1101 may display the menu 1120 for editing when an handwriting input-related application (e.g., an application such as note, memo, diary) is executed. For example, the menu 1120 for editing may include at least one object for performing at least one function among handwriting input tilting, handwriting input spacing adjustment, width extension, line alignment, or vertical spacing adjustment. For example, the menu 1120 for editing may be implemented in the form of a toolbar.

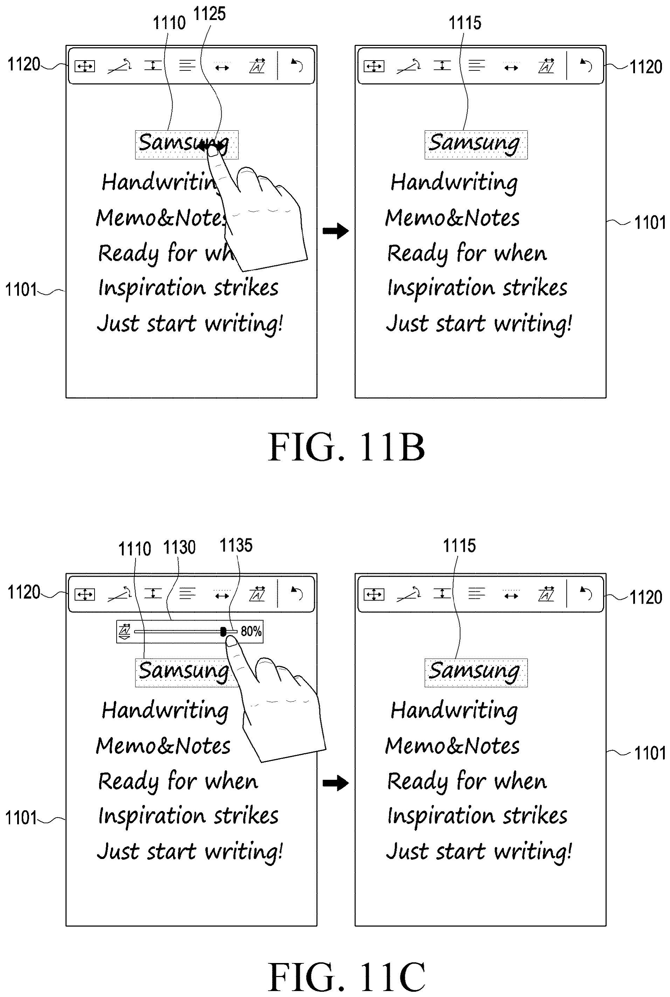

Referring to FIGS. 11B and 11C, according to an embodiment, when a manual slope control object is selected through the menu 1120 for editing, the electronic device 1101 may manually adjust the slope of the first handwriting input 1110 according to the user's input.

Referring to FIG. 11B, according to an embodiment, the electronic device 1101 may adjust the slope of the first handwriting input 1110 based on an input to the first handwriting input 1110 (e.g., tap or drag input through a stylus pen or the user's finger). For example, if the input 1125 to the first handwriting input 1110 (e.g., tap or drag input through a stylus pen or the user's finger) is identified, the electronic device 1101 may display the first handwriting input 1115 in which the slope is adjusted. For example, a direction or angle of the slope may be determined according to a direction or length of the input to the first handwriting input 1110.

Referring to FIG. 11C, according to an embodiment, the electronic device 1101 may adjust the slope of the first handwriting input 1110 based on an input to the control menu 1130 (e.g., tap or drag input through a stylus pen or the user's finger). For example, the electronic device 1101 may adjust the slope of the first handwriting input 1110 according to an input to the slide bar 1135 included in the control menu 1130. For example, if an input to the control menu 1130 (e.g., tap or drag input through a stylus pen or the user's finger) is identified, the electronic device 1101 may display the first handwriting input 1115 in which the slope is adjusted. For example, a direction or angle of the slope may be determined according to a direction or length of the input to the slide bar 1135.

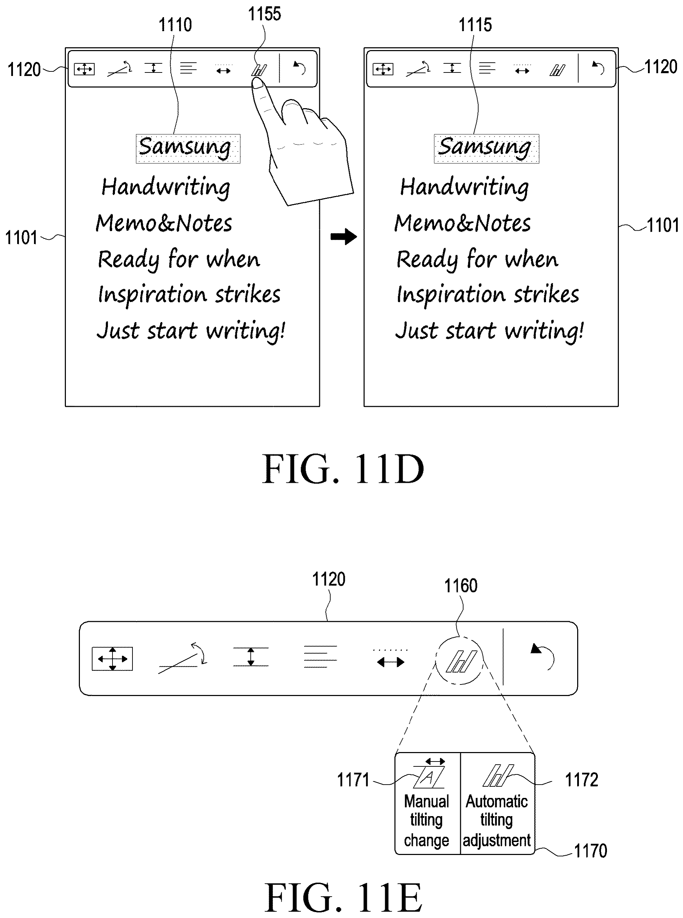

Referring to FIG. 11D, according to an embodiment, if the automatic slope control object 1155 is selected through the menu 1120 for editing, the electronic device 1101 may execute an automatic slope control function. The electronic device 1101 may adjust the slope of the first handwriting input 1110 based on an input to the automatic slope control object 1155 (e.g., tap or touch through a stylus pen or the user's finger). For example, a direction or angle of the slope may be automatically determined by the processor 220 (e.g., the processor 220 of FIG. 2) of the electronic device 1101. For example, if an input to the automatic slope control object 1155 (e.g., tap or touch through a stylus pen or the user's finger) is identified, the electronic device 1101 may display the first handwriting input 1115 in which the slope is adjusted.

Referring to FIG. 11E, according to an embodiment, the electronic device 1101 may display the menu 1170 capable of selecting a manual tilting control function or an automatic tilting control function based on an input to the slope control object 1160 (e.g., long press input). For example, the menu 1170 may include a manual tilting control object 1171 and an automatic tilting control object 1172. The electronic device 1101 may perform a function corresponding to an object selected by the user out of the manual tilting control object 1171 and the automatic tilting control object 1172. In this case, the electronic device 1101 may display the object selected by the user in the menu 1120 for editing.

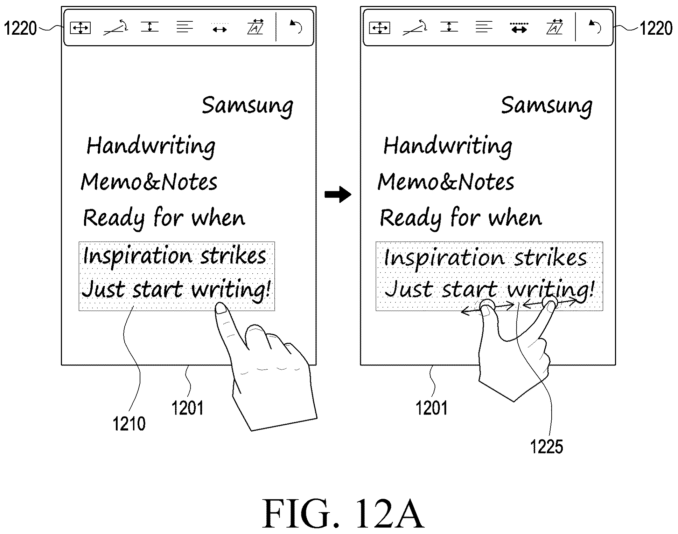

FIGS. 12A to 12D are views illustrating a method by which an electronic device changes a spacing of a letter or word included in a handwriting input through a menu displayed on a display, according to an embodiment.

Referring to FIGS. 12A to 12D, according to an embodiment, the electronic device 1201 (e.g., the electronic device 201 of FIG. 2) may display a handwriting input through a display (e.g., the display of FIG. 2).

According to an embodiment, the electronic device 1201 may select a first handwriting input 1210 among all the handwriting inputs based on a user input (e.g., tap, drag, double tap, long press input). In this case, the selected first handwriting input 1210 may be displayed to be distinguished from unselected handwriting inputs. When the first handwriting input 1210 is selected, the electronic device 1201 may display the menu 1220 for editing the first handwriting input 1110. Alternatively, even when the first handwriting input 1210 is not selected, the electronic device 1201 may display the menu 1220 for editing when an handwriting input-related application (e.g., an application such as note, memo, diary) is executed. For example, the menu 1220 for editing may be implemented identically or similarly to the menu 1120 for editing described in connection to FIG. 11.

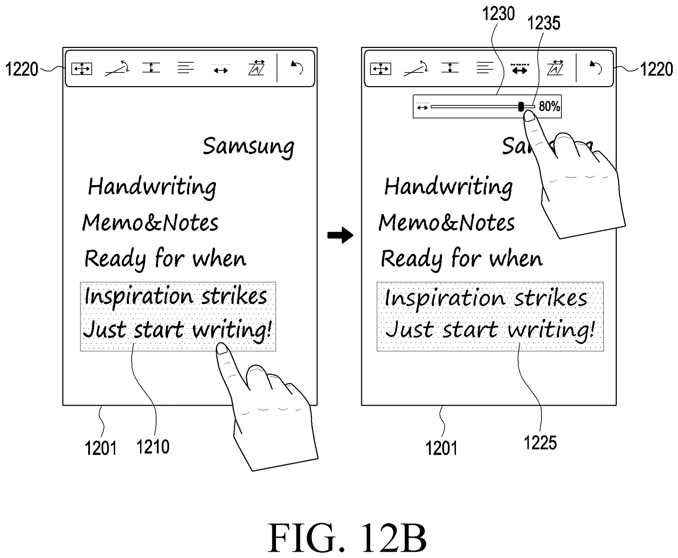

Referring to FIGS. 12A and 12B, according to an embodiment, if a manual control object (word or letter) is selected through the menu 1220 for editing, the electronic device 1201 may manually adjust the slope of the first handwriting input 1210 according to the user's input.

Referring to FIG. 12A, according to an embodiment, the electronic device 1201 may adjust the letter spacing (or word spacing) or width of the first handwriting input 1210 based on an input to the first handwriting input 1210 (e.g., tap or drag input through a stylus pen or the user's finger). If a division area of the first handwriting input 1210 is identified, the electronic device 1201 may adjust the letter spacing (or word spacing). Alternatively, when a division area of the first handwriting input 1210 is not identified, the electronic device 1201 may adjust the width of the first handwriting input 1210. For example, if an input to the first handwriting input 1210 (e.g., tap or drag input through a stylus pen or the user's finger) is identified, the electronic device 1201 may display the first handwriting input 1225 in which letter spacing or width is adjusted. For example, a length of the adjusted spacing or width may be determined according to a direction or length of the input to the first handwriting input 1110.

Referring to FIG. 12B, according to an embodiment, the electronic device 1101 may adjust the letter spacing or width of the first handwriting input 1210 based on an input to the control menu 1230 (e.g., tap or drag input through a stylus pen or the user's finger). For example, the electronic device 1101 may adjust the letter spacing or width of the first handwriting input 1210 according to an input to the slide bar 1235 included in the control menu 1230. For example, if an input to the control menu 1230 (e.g., tap or drag input through a stylus pen or the user's finger) is identified, the electronic device 201 may display the first handwriting input 1225 in which letter spacing or width is adjusted. For example, a length of the adjusted spacing or width may be determined according to a direction or length of the input to the slide bar 1235.

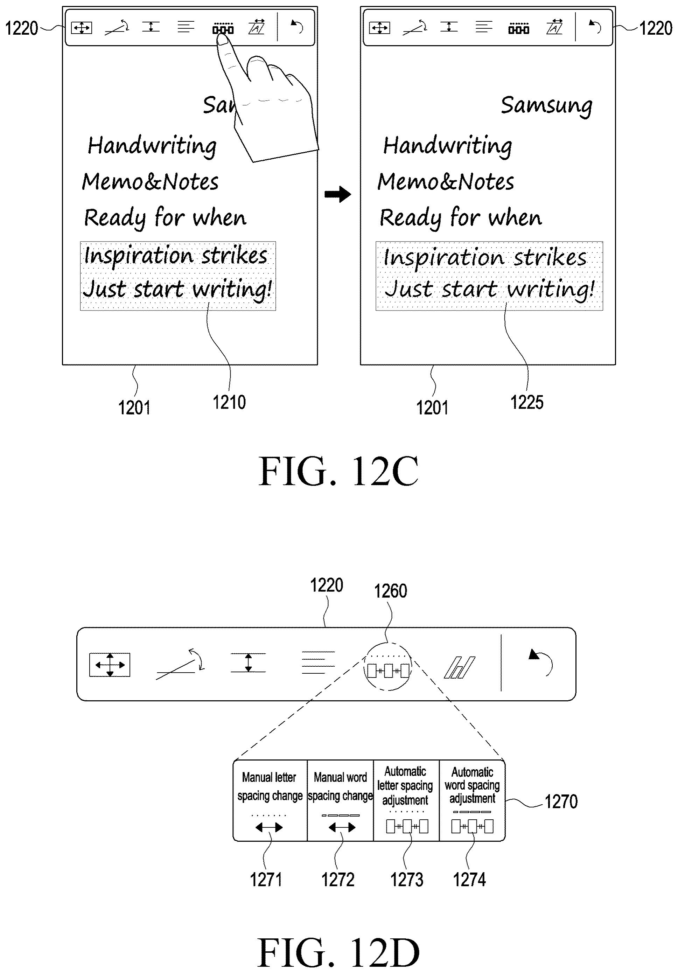

Referring to FIG. 12C, according to an embodiment, if a spacing automatic control object is selected through the menu 1220 for editing, the electronic device 1201 may execute a spacing automatic control function. The electronic device 1201 may adjust the letter spacing or width of the first handwriting input 1210 based on an input to the spacing automatic control object (e.g., tap or touch through a stylus pen or the user's finger). For example, the adjusted spacing or width may be automatically determined by the processor 220 (e.g., the processor 220 of FIG. 2) of the electronic device 1101. For example, if an input to the spacing automatic control object (e.g., tap or touch through a stylus pen or the user's finger) is identified, the electronic device 1201 may display the first handwriting input 1225 in which spacing or width is adjusted.

Referring to FIG. 12D, according to an embodiment, the electronic device 1201 may display the menu 1270 capable of selecting a plurality of spacing control functions based on an input to the spacing control object 1260 (e.g., long press input). For example, the menu 1270 may include a manual letter spacing control object 1271, a manual word spacing control object 1272, an automatic letter spacing control object 1273, and an automatic word spacing control object 1274. The electronic device 1201 may perform a function corresponding to an object selected by the user among the plurality of spacing control functions. In this case, the electronic device 1201 may display the object selected by the user in the menu 1220 for editing.

An electronic device 201 according to an embodiment may include a display 260, at least one processor 220, and memory 230 storing instructions. The instructions according to an embodiment may be configured to, when executed by the at least one processor, cause the electronic device to display, through the display, a handwriting input including a plurality of points by a user input. The instructions according to an embodiment may be configured to, when executed by the at least one processor, cause the electronic device to identify a plurality of first inflection points and a plurality of second inflection points among the plurality of points based on vertical coordinate values of each of the plurality of points. The instructions according to an embodiment may be configured to, when executed by the at least one processor, cause the electronic device to identify slope values of a plurality of lines connecting each of the plurality of first inflection points to each of the plurality of second inflection points adjacent to each other. The instructions according to an embodiment may be configured to, when executed by the at least one processor, cause the electronic device to identify a representative slope value of each of a plurality of sections for the handwriting input based on the slope values. The instructions according to an embodiment may be configured to, when executed by the at least one processor, cause the electronic device to determine first slope values of the plurality of points based on the representative slope value of each of the plurality of sections. The instructions according to an embodiment may be configured to, when executed by the at least one processor, cause the electronic device to adjust horizontal coordinate values of each of the plurality of points based on the first slope values and a target slope value to change a slope of the handwriting input.

The instructions according to an embodiment may be configured to, when executed by the at least one processor, cause the electronic device to identify second slope values satisfying a designated range among the slope values of the plurality of lines. The instructions according to an embodiment may be configured to, when executed by the at least one processor, cause the electronic device to determine the representative slope value for each of the plurality of sections based on the second slope values.

The instructions according to an embodiment may be configured to, when executed by the at least one processor, cause the electronic device to determine an average value of the first slope values as the target slope value.

The instructions according to an embodiment may be configured to, when executed by the at least one processor, cause the electronic device to determine an average value of the representative slope values of the plurality of sections as the target slope value.

The instructions according to an embodiment may be configured to, when executed by the at least one processor, cause the electronic device to determine a reference horizontal line of the handwriting input based on an average value of vertical coordinate values of midpoints included in the plurality of lines.

The instructions according to an embodiment may be configured to, when executed by the at least one processor, cause the electronic device to increase horizontal coordinate values of points located above the reference horizontal line among the plurality of points and decrease horizontal coordinate values of points located below the reference horizontal line among the plurality of points when the target slope value is smaller than an average value of the representative slope values of the plurality of sections.

The instructions according to an embodiment may be configured to, when executed by the at least one processor, cause the electronic device to decrease horizontal coordinate values of points located above the reference horizontal line among the plurality of points and increase horizontal coordinate values of points located below the reference horizontal line among the plurality of points when the target slope value is greater than an average value of the representative slope values of the plurality of sections.

The instructions according to an embodiment may be configured to, when executed by the at least one processor, cause the electronic device to increase horizontal coordinate values of points located above the reference horizontal line among the plurality of points and decrease horizontal coordinate values of points located below the reference horizontal line among the plurality of points when the target slope value is smaller than an average value of the first slope values.

The instructions according to an embodiment may be configured to, when executed by the at least one processor, cause the electronic device to decrease horizontal coordinate values of points located above the reference horizontal line among the plurality of points and increase horizontal coordinate values of points located below the reference horizontal line among the plurality of points when the target slope value is greater than an average value of the first slope values.

The instructions according to an embodiment may be configured to, when executed by the at least one processor, cause the electronic device to determine a first point of each of the plurality of points based on the first slope value of each of the plurality of points and the reference horizontal line. The instructions according to an embodiment may be configured to, when executed by the at least one processor, cause the electronic device to determine a second point for each of the plurality of points having vertical coordinate values identical to vertical coordinate values of each of the plurality of points based on the first point and the target slope value. The instructions according to an embodiment may be configured to, when executed by the at least one processor, cause the electronic device to change each of the plurality of points to the second point.

The instructions according to an embodiment may be configured to, when executed by the at least one processor, cause the electronic device to identify letters or words included in the handwriting input. The instructions according to an embodiment may be configured to, when executed by the at least one processor, cause the electronic device to adjust spacing between the letters or the words based on heights of the letters or the words.

The plurality of first inflection points according to an embodiment may be points having vertical coordinate values greater than vertical coordinate values of points adjacent on two opposite sides among the plurality of points included in the handwriting input. The plurality of second inflection points according to an embodiment may be points having vertical coordinate values smaller than vertical coordinate values of points adjacent on two opposite sides among the plurality of points included in the handwriting input.

The instructions according to an embodiment may be configured to, when executed by the at least one processor, cause the electronic device to display a menu for changing the slope of the handwriting input. The instructions according to an embodiment may be configured to, when executed by the at least one processor, cause the electronic device to change the slope of the handwriting input based on an input to the menu.

The instructions according to an embodiment may be configured to, when executed by the at least one processor, cause the electronic device to change the slope of the handwriting input based on a drag input to the handwriting input.

A method of operating an electronic device 201 according to an embodiment may include displaying, through a display 260 included in the electronic device, a handwriting input including a plurality of points by a user input. The method of operating an electronic device according to an embodiment may include identifying a plurality of first inflection points and a plurality of second inflection points among the plurality of points based on vertical coordinate values of each of the plurality of points. The method of operating an electronic device according to an embodiment may include identifying slope values of a plurality of lines connecting each of the plurality of first inflection points to each of the plurality of second inflection points adjacent to each other. The method of operating an electronic device according to an embodiment may include identifying a representative slope value of each of a plurality of sections for the handwriting input based on the slope values. The method of operating an electronic device according to an embodiment may include determining first slope values of the plurality of points based on the representative slope value of each of the plurality of sections. The method of operating an electronic device according to an embodiment may include adjusting horizontal coordinate values of each of the plurality of points based on the first slope values and a target slope value to change a slope of the handwriting input.

The operation of identifying a representative slope value of each of the plurality of sections according to an embodiment may include identifying second slope values satisfying a designated range among the slope values of the plurality of lines. The operation of identifying a representative slope value of each of the plurality of sections according to an embodiment may include determining the representative slope value for each of the plurality of sections based on the second slope values.

The method of operating an electronic device according to an embodiment may further include determining an average value of the first slope values or an average value of the representative slope values of the plurality of sections as the target slope value.

The operation of adjusting the horizontal coordinate values of each of the plurality of points according to an embodiment may include determining a reference horizontal line of the handwriting input based on an average value of vertical coordinate values of midpoints included in the plurality of lines. The operation of adjusting the horizontal coordinate values of each of the plurality of points according to an embodiment may include determining a first point of each of the plurality of points based on the first slope value of each of the plurality of points and the reference horizontal line. The operation of adjusting the horizontal coordinate values of each of the plurality of points according to an embodiment may include determining a second point for each of the plurality of points having vertical coordinate values identical to vertical coordinate values of each of the plurality of points based on the first point and the target slope value. The operation of adjusting the horizontal coordinate values of each of the plurality of points according to an embodiment may include changing each of the plurality of points to the second point.

The plurality of first inflection points according to an embodiment may be points having vertical coordinate values greater than vertical coordinate values of points adjacent on two opposite sides among the plurality of points included in the handwriting input. The plurality of second inflection points according to an embodiment may be points having vertical coordinate values smaller than vertical coordinate values of points adjacent on two opposite sides among the plurality of points included in the handwriting input.

A computer-readable, non-transitory recording medium 130, 230 according to an embodiment may store instructions capable of performing displaying, through a display 260 included in an electronic device 201, a handwriting input including a plurality of points by a user input, identifying a plurality of first inflection points and a plurality of second inflection points among the plurality of points based on vertical coordinate values of each of the plurality of points, identifying slope values of a plurality of lines connecting each of the plurality of first inflection points to each of the plurality of second inflection points adjacent to each other, identifying a representative slope value of each of a plurality of sections for the handwriting input based on the slope values, determining first slope values of the plurality of points based on the representative slope value of each of the plurality of sections, and adjusting horizontal coordinate values of each of the plurality of points based on the first slope values and a target slope value to change a slope of the handwriting input.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (201), comprising:

   a display (260);
   at least one processor (220), and
   memory (230) storing instructions, wherein the instructions, when executed by the at least one processor, cause the electronic device to:

   display, through the display, a handwriting input including a plurality of points by a user input;
   identify a plurality of first inflection points and a plurality of second inflection points among the plurality of points based on vertical coordinate values of each of the plurality of points;
   identify slope values of a plurality of lines connecting each of the plurality of first inflection points to each of the plurality of second inflection points adjacent to each other;
   identify a representative slope value of each of a plurality of sections for the handwriting input based on the slope values;
   determine first slope values of the plurality of points based on the representative slope value of each of the plurality of sections; and
   adjust horizontal coordinate values of each of the plurality of points based on the first slope values and a target slope value to change a slope of the handwriting input.

2. The electronic device of claim 1, wherein the instructions are configured to, when executed by the at least one processor, cause the electronic device to:

   identify second slope values satisfying a designated range among the slope values of the plurality of lines; and
   determine the representative slope value for each of the plurality of sections based on the second slope values.

3. The electronic device of any one of claims 1 to 2, wherein the instructions are configured to, when executed by the at least one processor, cause the electronic device to determine an average value of the first slope values as the target slope value.

4. The electronic device of any one of claims 1 to 3, wherein the instructions are configured to, when executed by the at least one processor, cause the electronic device to determine an average value of the representative slope values of the plurality of sections as the target slope value.

5. The electronic device of any one of claims 1 to 4, wherein the instructions are configured to, when executed by the at least one processor, cause the electronic device to determine a reference horizontal line of the handwriting input based on an average value of vertical coordinate values of midpoints included in the plurality of lines.

6. The electronic device of any one of claims 1 to 5, wherein the instructions are configured to, when executed by the at least one processor, cause the electronic device to, when the target slope value is smaller than an average value of the representative slope values of the plurality of sections, increase horizontal coordinate values of points located above the reference horizontal line among the plurality of points, and decrease horizontal coordinate values of points located below the reference horizontal line among the plurality of points.

7. The electronic device of any one of claims 1 to 6, wherein the instructions are configured to, when executed by the at least one processor, cause the electronic device to, when the target slope value is greater than an average value of the representative slope values of the plurality of sections, decrease horizontal coordinate values of points located above the reference horizontal line among the plurality of points, and increase horizontal coordinate values of points located below the reference horizontal line among the plurality of points.

8. The electronic device of any one of claims 1 to 7, wherein the instructions are configured to, when executed by the at least one processor, cause the electronic device to, when the target slope value is smaller than an average value of the first slope values, increase horizontal coordinate values of points located above the reference horizontal line among the plurality of points, and decrease horizontal coordinate values of points located below the reference horizontal line among the plurality of points.

9. The electronic device of any one of claims 1 to 8, wherein the instructions are configured to, when executed by the at least one processor, cause the electronic device to:

when the target slope value is greater than an average value of the first slope values, decrease horizontal coordinate values of points located above the reference horizontal line among the plurality of points, and increase horizontal coordinate values of points located below the reference horizontal line among the plurality of points.

10. The electronic device of any one of claims 1 to 9, wherein the instructions are configured to, when executed by the at least one processor, cause the electronic device to:

determine a first point of each of the plurality of points based on the first slope value of each of the plurality of points and the reference horizontal line;
determine a second point for each of the plurality of points having vertical coordinate values identical to vertical coordinate values of each of the plurality of points based on the first point and the target slope value; and
change each of the plurality of points to the second point.

11. The electronic device of any one of claims 1 to 10, wherein the instructions are configured to, when executed by the at least one processor, cause the electronic device to:

identify letters or words included in the handwriting input; and
adjust spacing between the letters or the words based on heights of the letters or the words.

12. The electronic device of any one of claims 1 to 11, wherein the plurality of first inflection points are points having vertical coordinate values greater than vertical coordinate values of points adjacent on two opposite sides among the plurality of points included in the handwriting input, and
wherein the plurality of second inflection points are points having vertical coordinate values smaller than vertical coordinate values of points adjacent on two opposite sides among the plurality of points included in the handwriting input.

13. The electronic device of any one of claims 1 to 12, wherein the instructions are configured to, when executed by the at least one processor, cause the electronic device to:

display a menu for changing the slope of the handwriting input; and
change the slope of the handwriting input based on an input to the menu.

14. The electronic device of any one of claims 1 to 13, wherein the instructions are configured to, when executed by the at least one processor, cause the electronic device to change the slope of the handwriting input based on a drag input to the handwriting input.

15. A method for operating an electronic device (201), the method comprising:

displaying, through a display (260) included in the electronic device, a handwriting input including a plurality of points by a user input;
identifying a plurality of first inflection points and a plurality of second inflection points among the plurality of points based on vertical coordinate values of each of the plurality of points;
identifying slope values of a plurality of lines connecting each of the plurality of first inflection points to each of the plurality of second inflection points adjacent to each other;
identifying a representative slope value of each of a plurality of sections for the handwriting input based on the slope values;
determining first slope values of the plurality of points based on the representative slope value of each of the plurality of sections; and
adjusting horizontal coordinate values of each of the plurality of points based on the first slope values and a target slope value to change a slope of the handwriting input.

FIG. 1

EP 4 679 248 A1

FIG. 2

EP 4 679 248 A1

START

DISPLAY HANDWRITING INPUT INCLUDING
PLURALITY OF POINTS BY USER INPUT ～301

IDENTIFY PLURALITY OF FIRST INFLECTION POINTS AND PLURALITY
OF SECOND INFLECTION POINTS AMONG THE
PLURALITY OF POINTS BASED ON VERTICAL COORDINATE
VALUES OF EACH OF PLURALITY OF POINTS ～303

IDENTIFY SLOPE VALUES OF A PLURALITY OF LINES
CONNECTING A PLURALITY OF FIRST INFLECTION POINTS
TO A PLURALITY OF SECOND INFLECTION POINTS
ADJACENT TO EACH OTHER ～305

IDENTIFY REPRESENTATIVE SLOPE VALUES OF
THE PLURALITY OF SECTIONS BASED ON THE SLOPE VALUES ～307

DETERMINE FIRST SLOPE VALUES OF THE PLURALITY OF
POINTS BASED ON THE REPRESENTATIVE
SLOPE VALUES OF THE PLURALITY OF SECTIONS ～309

CHANGE THE SLOPE OF THE HANDWRITING INPUT BY ADJUSTING
THE HORIZONTAL COORDINATE VALUE OF THE PLURALITY
OF POINTS BASED ON THE FIRST SLOPE VALUES
AND THE TARGET SLOPE VALUE ～311

END

FIG. 3

22

START

IDENTIFY SLOPE VALUES OF A PLURALITY OF LINES CONNECTING
TO THE PLURALITY OF SECOND INFLECTION POINTS ~401

IDENTIFY SECOND SLOPE VALUES SATISFYING
DESIGNATED RANGE AMONG SLOPE VALUES ~403

DETERMINE REPRESENTATIVE SLOPE VALUES FOR THE
PLURALITY OF SECTIONS BASED ON THE SECOND SLOPE VALUES ~405

END

# FIG. 4

FIG. 5A

○ Normal point

⊘ Local maximum point (520)

● Local minimum point (530)

FIG. 5B

FIG. 5C

FIG. 5D

FIG. 5E

FIG. 5F

START

DETERMINE TARGET SLOPE VALUE ~601

DETERMINE REFERENCE HORIZONTAL LINE OF
HANDWRITING INPUT BASED ON VERTICAL COORDINATE VALUES
OF MIDPOINTS INCLUDED IN PLURALITY OF LINES ~603

ADJUST POSITION OF EACH OF PLURALITY OF POINTS
TO CHANGE SLOPE OF HANDWRITING INPUT ~605

END

FIG. 6

Slope values of points

(0,0)

X

... 88 **88** 87 ... 84 84 ... 81 **80** 80 ... 82 83 ... 85 **85** 85 ...

Target slope value

... 45 45 45 ... 45 45 ... 45 45 45 ... 45 45 ... 45 45 45 ...

(Assumed to be 45 degrees)

## FIG. 7A

Reference horizontal line

720

## FIG. 7B

730

720

Reference
horizontal line
(Y coordinate)

# FIG. 7C

730

731

720

736

# FIG. 7D

p(xp,y)

θ

o(xo,yb)

720

## FIG. 8A

q(xq,y)

θt

o(xo,yb)

720

## FIG. 8B

p(xp,y) ●———→● q(xq,y)

720

# FIG. 8C

START

IDENTIFY LETTER OR WORD
FROM HANDWRITING INPUT — 901

DIVISION
AREA OF LETTER OR WORD
IDENTIFIED? — 903

NO

YES — 905

ADJUST SPACING OF LETTER OR WORD
BASED ON HEIGHT OF LETTER OR WORD

ADJUST WIDTH OF HANDWRITING INPUT — 907

END

FIG. 9

FIG. 10A

FIG. 10B

1120

Samsung

Handwriting

Memo&Note

Ready for w...

Inspiration strikes

Just start writing!

1110

1101

# FIG. 11A

FIG. 11B

FIG. 11C

1155

1110

1115

1120

1120

Samsung

Handwriting
Memo&Notes
Ready for when
Inspiration strikes
Just start writing!

1101

Samsung

Handwriting
Memo&Notes
Ready for when
Inspiration strikes
Just start writing!

1101

FIG. 11D

1120

1160

1171

1172

Manual
tilting
change

Automatic
tilting
adjustment

1170

FIG. 11E

FIG. 12A

FIG. 12B

1220

Samsung

Handwriting
Memo&Notes
Ready for when
Inspiration strikes
Just start writing!

1201   1210

Samsung

Handwriting
Memo&Notes
Ready for when
Inspiration strikes
Just start writing!

1201   1225

FIG. 12C

1220   1260

| Manual letter spacing change | Manual word spacing change | Automatic letter spacing adjustment | Automatic word spacing adjustment |
|---|---|---|---|
| ....... ↔ | ═══ ↔ | □↦□↦□ | □↦□↦□ |

1270

1271   1272   1273   1274

FIG. 12D

**EP 4 679 248 A1**

## INTERNATIONAL SEARCH REPORT

| International application No. |
|---|
| **PCT/KR2024/003481** |

| A. | CLASSIFICATION OF SUBJECT MATTER |
|---|---|

**G06F 3/04883**(2022.01)i; **G06F 3/041**(2006.01)i; **G06F 3/0482**(2013.01)i; **G06F 3/04842**(2022.01)i

According to International Patent Classification (IPC) or to both national classification and IPC

| B. | FIELDS SEARCHED |
|---|---|

Minimum documentation searched (classification system followed by classification symbols)

G06F 3/04883(2022.01); G06F 3/0354(2013.01); G06F 3/041(2006.01); G06F 3/0484(2013.01); G06F 3/0488(2013.01); G06K 9/00(2006.01); G06K 9/32(2006.01); G06K 9/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 변곡점(inflection point), 라인(line), 기울기(slope), 필기 입력(handwriting input), 가로 좌표(horizontal coordinate)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2016-0010998 A (DIOTEK CO., LTD.) 29 January 2016 (2016-01-29) See paragraphs [0045]-[0096]; claims 1 and 6; and figures 1-6c. | 1-15 |
| A | KR 10-2020-0032492 A (SAMSUNG ELECTRONICS CO., LTD.) 26 March 2020 (2020-03-26) See paragraphs [0094]-[0159]; and figures 6-13b. | 1-15 |
| A | KR 10-2022-0017290 A (SAMSUNG ELECTRONICS CO., LTD.) 11 February 2022 (2022-02-11) See paragraphs [0042]-[0086]; and figures 2-5b. | 1-15 |
| A | JP 2000-003407 A (SEIKO EPSON CORP.) 07 January 2000 (2000-01-07) See paragraphs [0050]-[0145]; and figures 1-11. | 1-15 |
| A | KR 10-2020-0101481 A (SAMSUNG ELECTRONICS CO., LTD.) 28 August 2020 (2020-08-28) See paragraphs [0053]-[0146]; and figures 2-24. | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 June 2024** | **17 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

41

EP 4 679 248 A1

## INTERNATIONAL SEARCH REPORT
### Information on patent family members

International application No.

**PCT/KR2024/003481**

| Patent document cited in search report | | | Publication date (day/month/year) | Patent family member(s) | | | Publication date (day/month/year) |
|---|---|---|---|---|---|---|---|
| KR | 10-2016-0010998 | A | 29 January 2016 | None | | | |
| KR | 10-2020-0032492 | A | 26 March 2020 | KR | 10-2468082 | B1 | 18 November 2022 |
| | | | | WO | 2020-060121 | A1 | 26 March 2020 |
| KR | 10-2022-0017290 | A | 11 February 2022 | EP | 4170545 | A1 | 26 April 2023 |
| | | | | WO | 2022-030865 | A1 | 10 February 2022 |
| JP | 2000-003407 | A | 07 January 2000 | JP | 3855466 | B2 | 13 December 2006 |
| KR | 10-2020-0101481 | A | 28 August 2020 | US | 11087516 | B2 | 10 August 2021 |
| | | | | US | 2020-0242825 | A1 | 30 July 2020 |
| | | | | WO | 2020-159196 | A1 | 06 August 2020 |

Form PCT/ISA/210 (patent family annex) (July 2022)